# EUROPÄISCHE PATENTANMELDUNG

(11) **EP 2 565 508 A1**
(43) Veröffentlichungstag der Anmeldung: **06.03.2013**
(21) Anmeldenummer: 12005894.6
(22) Anmeldetag: 16.08.2012
(51) Int. Cl.: F16L 29/04

(54) **Kupplung für ein Hydraulik- oder Pneumatiksystem**

(30) Priorität: 01.09.2011 DE 102011111790
(71) Anmelder: Meco Eckel GmbH, 35216 Biedenkopf-Wallau (DE)
(72) Erfinder: Stark, Erhard, 56477 Nister-Möhrendorf (DE); Müller, Michael, 35216 Biedenkopf-Breidenstein (DE)
(74) Vertreter: Flaccus, Rolf-Dieter

(57) **Zusammenfassung**

Kupplung für ein Hydraulik- oder Pneumatiksystem, bestehend aus mindestens einem Kupplungskopf (1a, 1b) und mindestens einem Ventil (2), wobei das Ventil (2) dermaßen angeordnet ist, dass es im abgekuppelten zustand den Ausfluss des verwendeten Systemfluides verhindert und im angekuppelten zustand einen Fluss des Systemfluides zulässt.

## Beschreibung

Die vorliegende Erfindung befasst sich mit einer Kupplung für ein Hydraulik- oder Pneumatiksystem.

In den unterschiedlichsten technischen Bereichen werden Hydrauliksysteme oder Pneumatiksysteme, z.B. zur Bewegung von Maschinenteilen aller Art, verwendet. In dem Fall, dass zwei Teile einer solchen Hydraulik, welche Hydraulikflüssigkeit führen, oder Pneumatik, welche ein Gas unter Hochdruck führen, reversibel verbunden werden müssen, werden in der Regel Kupplungen für eine Hydraulik oder Pneumatik verwendet.

Da die Medien in einer Hydraulik und einer Pneumatik unter dem Sammelbegriff 'Fluide' zusammengefasst werden können, wird im Folgenden das Fluid zur Betätigung der Hydraulik oder Pneumatik als 'Systemfluid' bezeichnet.

Zum Beispiel werden Schieber von Druckgussformen oftmals zu ihrer Bewegung mit Hydraulikzylindern versehen, wobei diese Zylinder an eine Hydraulikleitung angeschlossen werden müssen.

Insbesondere in dem Bereich des Druckgusses bedingt das bisher gebräuchliche System einen hohen zeitaufwand sowohl bei immer wiederkehrender Demontage und Remontage der Formen, als auch bei Reparaturen und Neubestückungen, die im Produktionsprozess ständig vorkommen.

Gleiches gilt auch z.B. bei Formtransporten. In diesen Fällen müssen Traversen einschließlich der daran montierten Hydraulikzylinder demontiert und wieder remontiert werden.

Oftmals ist bei den bestehenden Systemen eine Demontage systembedingt mit einem massiven Ölverlust verbunden.

Im Vergleich zu ruhenden Komponenten der Hydrauliksysteme unterliegen bewegte Teile, z.B. die verwendeten Hydraulikrohre oder Hydraulikschläuche sowie die notwendigen Verschraubungen, wegen der ihnen zuteil werdenden Beanspruchung im Rahmen der vorstehend aufgeführten Prozesse einer sehr viel höheren Belastung. Daher sind diese bewegten Teile deutlich reparaturanfälliger als unbewegte. Reparaturen belasten jedoch den Nutzungsgrad und die Nutzungszeit der Hydraulik.

Die Vielzahl an Wiederholungen der oben aufgeführten Prozesse, die im Lebenszyklus einer Form anstehen, wirken sich auf die Kosten aus, natürlich auch insbesondere in Verbindung mit dem erreichbaren Nutzungsgrad der Form.

Daneben birgt das bisher übliche System Gefahrenpotential für die mit der Form arbeitenden Menschen. Dies gilt für das oben genannte Beispiel für die Beschäftigten beim Hersteller der Form und auch für die in der Gießerei beschäftigten Mitarbeiter sowohl an der Druckgießmaschine als auch im Instandhaltungsbereich.

Steht das Hydrauliksystem unter Druck, können im Falle einer Störung, etwa bei Leckagen oder Rohrleitungsbrüchen, flüssige Medien mit bis zu 210 bar Druck austreten. Ein solcher mit Hochdruck austretender, gerichteter Strahl birgt ein hohes Gefahrenpotential für in der Nähe befindliche Menschen und technische Einrichtungen.

Der vorliegenden Erfindung lag die Aufgabe zugrunde, eine Kupplung für eine Hydraulik oder Pneumatik zur Verfügung zu stellen, welche die oben aufgeführten Nachteile überwindet und die Erstellung eines Pneumatik- oder Hydrauliksystems ermöglicht, das jederzeit schnell, unkompliziert und sicher getrennt und wieder zusammengeführt werden kann.

Die Aufgabe wird durch eine Kupplung für eine Hydraulik oder Pneumatik gemäß Anspruch 1 gelöst.

Die erfindungsgemäße Kupplung für eine Hydraulik oder Pneumatik besteht aus mindestens einem Endstück einer Leitung für ein Systemfluid (Kupplungskopf) und mindestens einem Ventil, wobei das Ventil dermaßen angeordnet ist, dass es im abgekuppelten Zustand den Ausfluss des verwendeten Systemfluides verhindert und im angekuppelten Zustand einen Fluss des Systemfluides zulässt.

Als Endstück einer Leitung, im Folgenden der Einfachheit halber als Kupplungskopf bezeichnet, ist ein Endstück in dem Pneumatik- oder Hydrauliksystem bezeichnet, durch welches im ausgebauten Zustand der Systemkomponente ein Ausfluss des verwendeten Systemfluides erfolgen könnte.

In der Regel sind diese Endstücke die Endstücke von Rohren oder Schläuchen. Aber als solch ein Endstück werden auch fest eingebaute Durchlässe oder die Auslässe von Bohrungen in Systemkomponenten bezeichnet, durch die das Systemfluid im Betrieb fließt.

Zum Beispiel sind in einem System, in dem ein Schlauch an einem Hydraulikzylinder angeschlossen wird, die Endstücke sowohl das Ende des Schlauches als auch die Bohrung im Zylinder, an der der Schlauch angeschlossen wird, und durch welche Hydraulikflüssigkeit in den Zylinderraum fließen kann.

Bevorzugte Systemfluide sind Hydraulikflüssigkeiten, insbesondere Wasser oder Öle, oder Gase, insbesondere Luft.

Als 'Ventil' werden alle möglichen Komponenten bezeichnet, die es erlauben, mit einem Ventilkörper einen Durchgang für ein Systemfluid reversibel dicht zu verschließen, so dass im geschlossenen Zustand das Systemfluid nicht mehr durch diesen Durchgang fließen kann. Ein Ventil weist darüber hinaus eine Möglichkeit der Öffnung auf, so dass im geöffneten Zustand das Systemfluid durch den Durchgang fließen kann. Zumeist wird die Öffnung des Ventils durch ein Öffnungselement ermöglicht, welches bevorzugt am Ventil selbst angebracht ist.

Dem Fachmann sind Ventile und Öffnungselemente für Ventile, wie z.B. Hebel oder Druckpunkte, bekannt.

In einer bevorzugten Ausführungsform wird das Ventil durch die Fließbewegung des Systemfluides, einen Schließmechanismus oder eine elastische Schließhilfe geschlossen und durch Druck von außen auf das Öffnungselement oder direkt auf den Ventilkörper geöffnet.

Bevorzugte Schließhilfen, die den Schließvorgang des Ventils unterstützen, sind Federn.

In einer bevorzugten Ausführungsform weist das Ventil zusätzlich noch mindestens eine Dichtung auf, welche die Dichtigkeit des Ventils unterstützt.

Ein bevorzugtes Ventil enthält mindestens einen zumindest teilweise konischen Ventilkörper, der im Fluiddurchlass des Kupplungskopfes verschiebbar angeordnet ist, wobei sich der Fluiddurchlass im Kupplungskopf zumindest teilweise konisch verjüngt, so dass im geschlossenen Zustand des Ventils der konische Teil des Ventilkörpers mit der konischen Verjüngung für das Systemfluid dicht abschließt. Im offenen Zustand fließt das Systemfluid an dem Ventilkörper vorbei oder durch den Ventilkörper hindurch, wobei es im letzteren Fall bevorzugt durch Öffnungen im Ventilkörper vor Erreichen der Verjüngung oder des konischen Teils des Ventilkörpers austritt.

Bevorzugt wird der Ventilkörper bei Druck von vorne in den Kupplungskopf hinein dermaßen verschoben, dass sich sein konischer Teil von der konischen Verjüngung entfernt und ein Durchfluss des Systemfluides auf diese Weise gewährleistet wird.

In einer bevorzugten Ausführungsform ragt ein Teil des Ventilkörpers als leicht zugängliches Öffnungselement aus dem Kupplungskopf heraus, so dass die Verschiebung und damit die Öffnung des Ventilkörpers durch Druck auf diesen herausragenden Teil einfach möglich ist.

Der Kupplungskopf ist in einer bevorzugten Ausführungsform in einer Verbindungsvorrichtung angebracht oder weist selbst eine Verbindungsvorrichtung auf, mit der dieser Kupplungskopf mit einem anderen Kupplungskopf, insbesondere seinem Gegenstück, verbunden werden kann.

In einer bevorzugten Ausführungsform enthält eine Verbindungsvorrichtung mindestens zwei Kupplungsköpfe.

Bevorzugt weist mindestens einer der Kupplungsköpfe Dichtungen auf, die unterstützen, dass kein Systemfluid aus der Verbindungsstelle der beiden Kupplungsköpfe austreten kann.

Es sind bei der Verbindung von Systemkomponenten mehrere mögliche Kombinationen denkbar. In dem Fall, dass keine Gefahr des Austritts von Systemfluid aus einer Komponente des Pneumatik- oder Hydrauliksystems besteht, kann diese Kupplung herkömmlich ohne Ventil gestaltet sein und mit der erfindungsgemäßen Kupplung verbunden werden.

Da jedoch in der Regel aus allen Systemkomponenten bei einer Demontage Systemfluide austreten könnten, ist bevorzugt, beide zu verbindenden Komponenten mit der erfindungsgemäßen Kupplung auszustatten.

Die Kupplungsköpfe sind in einer bevorzugten Ausführungsform so ausgeführt, dass bei einer Verbindung zweier Köpfe miteinander die Ventile automatisch geöffnet werden. Dies wird bevorzugt dadurch erreicht, dass der Kupplungskopf oder das Ventil der einen Kupplung mindestens einen Bereich aufweist, der so gestaltet ist, dass sich das Ventil des anderen Kupplungskopfes durch dessen Öffnungseinheit öffnet, sobald die beiden Kupplungen miteinander verbunden werden.

In einer besonders bevorzugten Ausführungsform wird dieser Bereich durch die Öffnungseinheit des jeweils anderen Ventils gebildet, so dass beim Verbinden der beiden Kupplungen die beiden Öffnungseinheiten der gegenüberliegenden Ventile aufeinander gedrückt werden und so beide Ventile insbesondere gleichzeitig geöffnet werden.

In einer bevorzugten Ausführungsform besteht ein Zuleitungssystem mit mindestens einer Zuleitung nicht aus einzelnen Rohren, sondern aus mindestens einem Durchlass in mindestens einem Materialblock. Die Verrohrung wird also durch Durchlässe, insbesondere Bohrungen oder Fräsungen, innerhalb eines Formrahmens ersetzt. Dieser Block kann auch aus Teilstücken zusammengesetzt sein, in denen die Durchlässe ausgestaltet wurden.

Die Endbereiche dieser Durchlässe sind bevorzugt als erfindungsgemäße Kupplungen ausgeführt.

Mittels der Kupplungen ist eine einfache An- und Abkupplung von Systemkomponenten des Pneumatik- oder Hydrauliksystems möglich, ohne dass Systemfluid austreten kann.

Zudem können diese Systemkomponenten beliebig umgruppiert werden, wobei auch Kupplungen unbelegt sein können.

Ein weiterer Vorteil dieser Anordnung ist, dass Schläuche oder Rohre durch dieses Zuleitungssystem ersetzt werden können. Auf diese Weise ist eine verrohrungslose Verbindung von Systemkomponenten zumindest für einen Teil des Pneumatik- oder Hydrauliksystems möglich.

Zum Beispiel können Hydraulikzylinder direkt an ein solches Zuleitungssystem verrohrungslos angebracht werden.

In einer bevorzugten Ausführungsform ist der Kupplungskopf einer Systemfluidzuleitung so gestaltet, dass die Querschnittsfläche des Durchflusses im Kupplungskopf bei geöffnetem Ventil der Querschnittsfläche des Durchflusses dieser Zuleitung entspricht.

Beispielsweise entspricht in dem Fall, dass ein Hydraulikzylinder mit einem Rohr 0 20 mm verrohrt wird, welches einen Durchfluss von ca. 0 15 mm gewährleistet, die Querschnittsfläche des Durchflusses im Kupplungskopf einem Rohr mit dem Durchfluss von ca. 0 15 mm.

Die Vorteile des erfindungsgemäßen Systems liegen darin, dass die Erfindung ein sicheres, schnell und unkompliziert zu handhabendes System darstellt, welches zum Schutz der Umwelt beiträgt, da im Falle einer Abkupplung aufgrund des schnellen Verschlusses durch das Ventil weniger Systemfluid austritt. Dies dient auch dem Schutz der Mitarbeiter, da diese weniger Kontakt mit dem Systemfluid haben.

Beispiele für die erfindungsgemäße Kupplung sind in den Abbildungen dargestellt.
Figur 1a und 1b zeigen zwei Ansichten einer erfindungsgemäßen Kupplung.
Figuren 2a und 2b zeigen skizzenhaft den Vorgang des Anschlusses zweier Kupplungen.
Figuren 3a und 3b zeigen zwei Verbindungsvorrichtungen mit jeweils zwei Kupplungen.

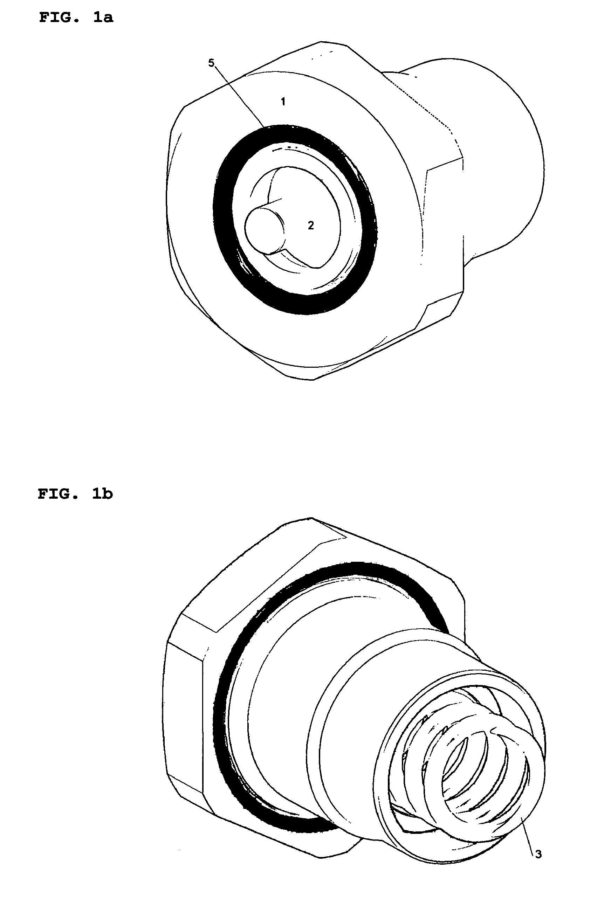

In den Figuren 1a und 1b ist eine erfindungsgemäße Kupplung perspektivisch dargestellt. In dem Kupplungskopf (1) ist an der Stelle, an der ansonsten das Systemfluid austritt, ein Ventil (2) angebracht, welches im abgekuppelten Zustand die Öffnung des Kupplungskopfes verschließt. Dadurch kann nach dem Abkuppeln der Kupplung kein Systemfluid mehr austreten, selbst wenn es unter hohem Druck stehen sollte.

In der Ansicht von schräg vorne (Fig. 1a) ist das Ventil (2) deutlich im Zentrum des Kupplungskopfes (1) zu sehen. Auf der Frontfläche des Kupplungskopfes ist bevorzugt eine Dichtung (5) angebracht. Diese Dichtung kann jedoch, insbesondere bei dem Gegenstück der dargestellten Kupplung, entfallen.

In der rückwärtigen Ansicht (Fig. 1b) ist eine Feder (3) zu erkennen, welche als Schließhilfe für das Ventil dient. Diese Feder ist optional. Durch diese Feder kann eine Schließung des Ventils erreicht werden, auch wenn der Druck des Systemfluides zu niedrig ist, um das Ventil zu schließen.

An der Rückseite des Kupplungskopfes ist auch eine als dicker schwarzer Kreis eingezeichnete Dichtung zu erkennen, die ebenfalls optional ist und einen Austritt des Systemfluides am Rand des Kupplungskopfes verhindert.

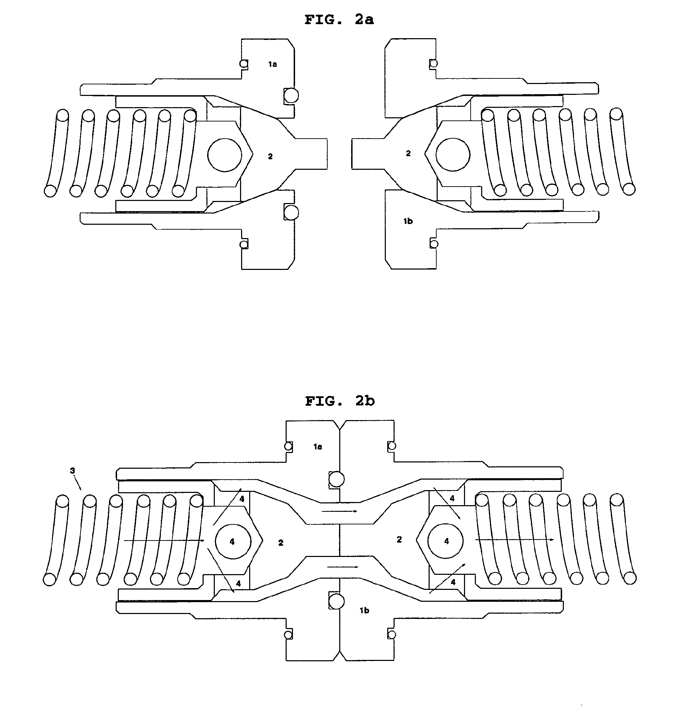

In Figur 2a liegen sich zwei Kupplungen (1a und 1b) gegenüber und sind zur Verbindung bereit. Beide Kupplungen weisen am Kupplungskopf Dichtungen auf (Kreise), die jedoch, wie oben beschrieben, optional sind.

Deutlich ist zu erkennen, dass die jeweiligen Ventile (2) geschlossen sind. Dies kann einerseits durch den vorherrschenden Druck des Systemfluides geschehen und/oder optional durch Federn (3).

Die Ventilkörper beider Ventile ragen über die Frontflächen der jeweiligen Kupplungsköpfe heraus, so dass sich bei der Ankupplung beide Ventilkörper gegenseitig in den Kupplungskopf hineinschieben (Figur 2b). Auf diese Weise wird automatisch beim Ankuppeln ein Durchfluss des Systemfluides (Pfeile) erreicht.

Im Falle der Figur 2b fließt das Systemfluid zunächst durch den Ventilkörper, tritt durch Löcher (4) nach außen in die Kupplungsköpfe, um danach wieder durch Löcher (4) im nächsten Ventilkörper weiterzufließen.

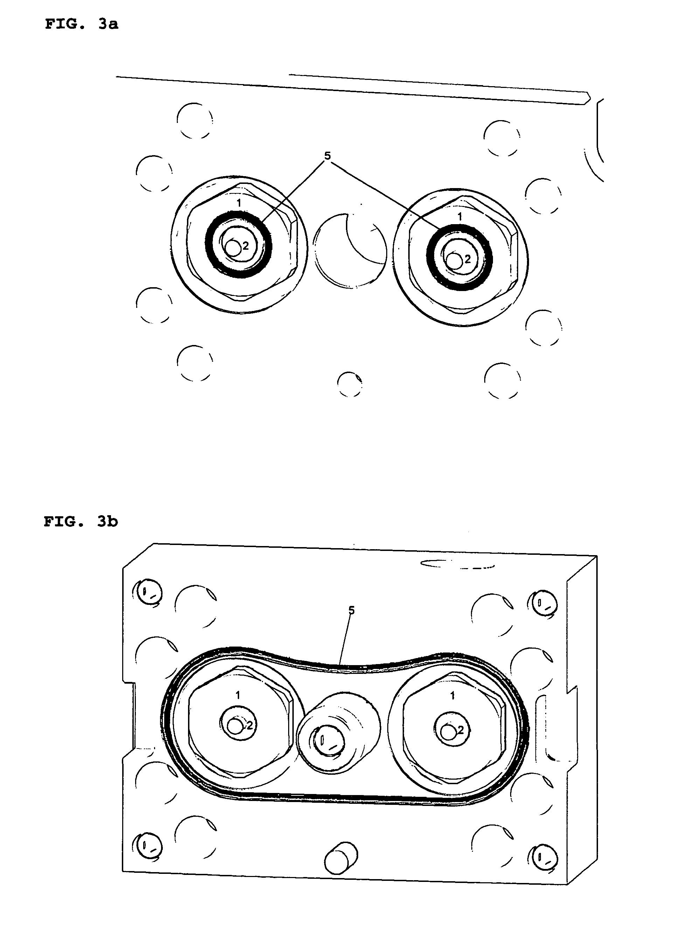

Figuren 3a und 3b zeigen mögliche Verbindungsvorrichtungen mit jeweils zwei Kupplungen (Vorlauf und Rücklauf eines Zylinders). Figur 3a stellt dabei einen Formrahmen mit zwei zentral angeordneten Kupplungen dar und Figur 3b ein Adaptionsstück zu diesem Formrahmen. Die eingezeichneten Dichtungen (5) sind optional. Deutlich zu sehen sind Löcher und Erhebungen, durch die die beiden Verbindungsvorrichtungen Verschiebungssicher miteinander verbunden werden können, z.B. mittels Schrauben.

Die Verbindungsvorrichtungen bestehen aus Blöcken, vorzugsweise Kunststoff- oder Metallblöcken.

In diese Blöcke können Schläuche oder Rohre zu den einzelnen Kupplungen führen, es ist aber bevorzugt, die Zuleitung für das Systemfluid durch Bohrungen in den Blöcken zu gewährleisten.

Eine bevorzugte Ausführungsform der Kupplung lässt einen Zuleitungs- und/oder Kupplungsquerschnitt von 0 15 mm zu und gewährleistet einen Druck von bis zu 210 bar ohne Leckage.

## Patentansprüche

1. Kupplung für ein Hydraulik- oder Pneumatiksystem, bestehend aus mindestens einem Kupplungskopf und mindestens einem Ventil, wobei das Ventil dermaßen angeordnet ist, dass es im abgekuppelten Zustand den Ausfluss des verwendeten Systemfluides verhindert und im angekuppelten Zustand einen Fluss des Systemfluides zulässt.

2. Kupplung gemäß Anspruch 1, **dadurch gekennzeichnet, dass** das Ventil mindestens einen zumindest teilweise konischen Ventilkörper enthält, der im Fluiddurchlass des Kupplungskopfes verschiebbar angeordnet ist, wobei sich der Fluiddurchlass im Kupplungskopf zumindest teilweise konisch verjüngt, so dass im geschlossenen Zustand des Ventils der konische Teil des Ventilkörpers mit der konischen Verjüngung für das Systemfluid dicht abschließt, und wobei bevorzugt ein Teil des Ventilkörpers als leicht zugängliches Öffnungselement aus dem Kupplungskopf herausragt, so dass die Verschiebung und damit die Öffnung des Ventilkörpers durch Druck auf diesen herausragenden Teil einfach möglich ist.

3. Kupplung gemäß einem der vorangehenden Ansprüche, **dadurch gekennzeichnet, dass** der Kupplungskopf in einer bevorzugten Ausführungsform in einer Verbindungsvorrichtung angebracht ist oder selber eine Verbindungsvorrichtung aufweist, mit der dieser Kupplungskopf mit einem anderen Kupplungskopf, insbesondere seinem Gegenstück, verbunden werden kann, wobei bevorzugt eine Verbindungsvorrichtung mindestens einen Kupplungskopf enthält.

4. Kupplung gemäß einem der vorangehenden Ansprüche, **dadurch gekennzeichnet, dass** die Kupplungsköpfe so ausgeführt sind, dass bei einer Verbindung zweier Köpfe miteinander die Ventile automatisch geöffnet werden.

5. Kupplung gemäß einem der vorangehenden Ansprüche, **dadurch gekennzeichnet, dass** der Kupplungskopf so gestaltet ist, dass die Querschnittsfläche des Durchflusses im Kupplungskopf bei geöffnetem Ventil der Querschnittsfläche des Durchflusses seiner Zu- oder Ableitung entspricht.

6. Zuleitung für ein Hydraulik- oder Pneumatiksystem, **dadurch gekennzeichnet, dass** mindestens eine Zuleitung aus einem Durchlass in einem Materialblock besteht, wobei der Endbereich mindestens eines der Durchlässe bevorzugt als erfindungsgemäße Kupplung nach einem der vorangehenden Ansprüche ausgeführt ist.
